# EUROPÄISCHE PATENTSCHRIFT

(11) **EP 1 905 617 B1**
(45) Veröffentlichungstag und Bekanntmachung des Hinweises auf die Patenterteilung: **02.12.2009**
(21) Anmeldenummer: 07018786.9
(22) Anmeldetag: 25.09.2007
(51) Int. Cl.: B60D 1/54

(54) **Anhängerkupplung**
Trailer tow-bar
Attelage

(30) Priorität: 27.09.2006 DE 102006045979
(43) Veröffentlichungstag der Anmeldung: 02.04.2008
(73) Patentinhaber: WESTFALIA - Automotive GmbH, 33378 Rheda-Wiedenbrück (DE)
(72) Erfinder: Abels, Frank, 29633 Munster (DE)
(74) Vertreter: Bregenzer, Michael

(56) Entgegenhaltungen:
- EP-A- 1 541 385
- EP-A- 1 650 059
- WO-A-2005/110781
- DE-A1- 10 104 186
- DE-A1- 10 347 817
- DE-U1-202004 005 806
- US-A- 2 445 133
- US-A- 3 717 362

## Beschreibung

Die Erfindung betrifft eine Anhängerkupplung mit den Merkmalen aus dem Oberbegriff des Patentanspruchs 1, bei der ein mit einem Kopfstück zur Befestigung eines Anhängers versehener Kupplungsarm aus einer von außerhalb des Fahrzeuges nicht sichtbaren Nichtgebrauchsstellung in eine zur Befestigung des Anhängers geeigneten Gebrauchsstellung bewegt wird, insbesondere geschwenkt wird.

Es sind verschiedene Ausführungsformen solcher Anhängerkupplungen bekannt. Beispielsweise beschreiben die GB 1 504 643 und die EP 1 142 732 B1 Anhängerkupplungen, bei denen der Kupplungsarm mit einem eine Achse aufweisenden Achskörper verbunden ist, die in einem fahrzeugfesten Lager, manuell oder durch motorischen Antrieb nach unten in Betriebsposition geschwenkt werden. In der Gebrauchsstellung kann dann der Kupplungsarm durch eine Verriegelung, die z.B. in der DE 103 20 302 A1 beschrieben wird, festgesetzt werden.

DE-U-202004005806 offenbart eine Anhängerkupplung gemäß dem Oberbegriff des Anspruchs 1, wobei eine Translationsbewegung des Achskörpers in eine sich der Translationsbewegung überlagernde Rotationsbewegung des Achskörpers ungewandelt wird.

Diese Ausführungen haben jedoch den Nachteil, dass bei einigen Fahrzeugtypen die Einbauräume hinter den Stoßfängern so eng sind, dass eine Integration mit Anhängerkupplungen nach dem Stand der Technik nicht möglich ist, insbesondere weil der Achskörper unterhalb des Stoßfängers von außen zu sehen ist, wenn sich der Kupplungsarm in Nichtgebrauchsstellung befindet.

Es ist die Aufgabe der Erfindung, eine Anhängerkupplung bereitzustellen, die eine Bewegung in eine nicht sichtbare Nichtgebrauchsstellung auch bei Fahrzeugen mit ungünstigem Integrationsraum möglich macht.

Die Erfindung löst die Aufgabe mit den Merkmalen aus dem kennzeichnenden Teil des Patentanspruchs 1. Vorteilhafte Weiterbildungen sind Bestandteil der abhängigen Ansprüche.

Es ist ein Grundgedanke der Erfindung, dass die Anhängerkupplung Umwandlungsmittel aufweist, durch welche während der Verstellung zwischen der Gebrauchsstellung und der Nichtgebrauchsstellung eine Rotationsbewegung des Achskörpers in eine sich der Rotationsbewegung überlagernde Translationsbewegung umgewandelt wird. Dadurch kann sich der Achskörper am Kupplungsarm bei einer durch motorische oder manuelle Kraft erzeugten Schwenkbewegung nach oben bewegen und damit hinter den Stoßfänger des Fahrzeuges treten, so dass der Kupplungsarm von außen nicht mehr in störender Weise sichtbar ist. Aus diesem Grund ist es vorteilhaft, wenn die Translationsbewegung in einer vertikalen Ebene erfolgt. Bevorzugt liegt somit der Achskörper in der Nichtgebrauchsstellung höher als in der Gebrauchsstellung.

Die Umwandlungsmittel können verschiedenartig ausgestaltet sein. Bei einer bevorzugten Ausgestaltung umfassen die Umwandlungsmittel eine Zahnstangenwinde, wobei insbesondere ein am Achskörper angeordnetes Zahnrad innerhalb einer verzahnten, als Zahnstange wirkende Führungskulisse, die insbesondere fahrzeugfest ist, abrollt.

Die Ausgestaltung der Führungskulisse ist an den vorhandenen Integrationsraum des Fahrzeugs angepasst. So kann die Führungskulisse horizontal linear, vertikal linear, in einem vorgegebenen Winkel schräg linear, bogenförmig oder in einer freien Kurvenform ausgestaltet sein.

Bei einer weiteren erfindungsgemäßen Ausgestaltung umfassen die Umwandlungsmittel mindestens eine Exzentervorrichtung, wobei insbesondere am Achskörper eine Exzenterscheibe angeordnet ist, an der ein Exzenterarm angelenkt ist.

Ferner können die Umwandlungsmittel eine Seilwinde umfassen, wobei als Zugmittel insbesondere ein Seil, ein Band oder eine Gliederkette vorgesehen sein kann.

In der Nichtgebrauchsstellung und/oder in der Gebrauchsstellung kann die Anhängerkupplung durch eine Verriegelungsmechanik verriegelbar sein. Hierbei kann das Festsetzen des Kupplungsarmes nach dem Stande der Technik, z.B. wie in der DE 103 20 302 A1 beschrieben, erfolgen. Insbesondere kann der am Kupplungsarm angeordnete Achskörper mit Verriegelungskugeln in ein dazu passendes, fahrzeugfestes Kugelbett in einer Halteplatte gepresst werden.

Die Verstellbewegung kann manuell oder motorisch bewirkt werden. Insbesondere kann sich der Kupplungsarm mit dem Achskörper nach der Entriegelung ausgehend von der Nichtgebrauchsstellung durch die Schwerkraft nach unten bewegen.

Mögliche Ausführungsbeispiele der Erfindung werden anhand der Figuren 1 bis 8 erläutert. Es zeigen:
- Fig. 1: einen Kupplungsarm und einen Achskörper einer Anhängerkupplung;
- Fig. 2: eine Anhängerkupplung mit dem Kupplungsarm und dem Achskörper aus Fig. 1 in der Gebrauchsstellung A und Nichtgebrauchsstellung B;
- Fig. 3: die Anhängerkupplung aus Fig. 2 im Querschnitt;
- Fig. 4: die Anhängerkupplung aus Fig. 2 in einer teilweise transparenten Darstellung in der Gebrauchsstellung A und Nichtgebrauchsstellung B;
- Fig. 5: die Anhängerkupplung aus Fig. 2 in einer räumlichen Darstellung in Gebrauchsstellung A und Nichtgebrauchsstellung B;
- Fig. 6: verschiedene Ausführungen von Führungskulissen;
- Fig. 7: eine zweite Ausgestaltung einer Anhängerkupplung in der Gebrauchsstellung A und Nichtgebrauchsstellung B und
- Fig. 8: eine dritte Ausgestaltung einer Anhängerkupplung in der Gebrauchsstellung A und Nichtgebrauchsstellung B.

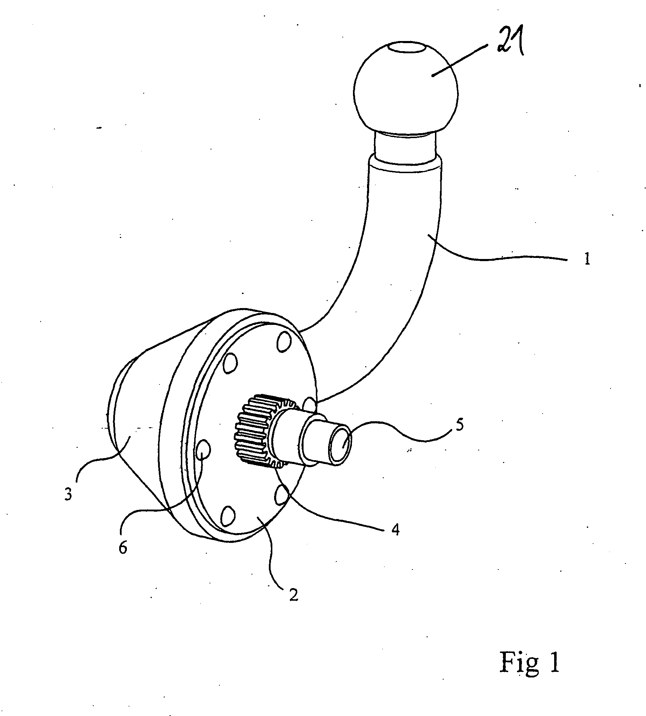

Die Fig. 1 bis 6 zeigen eine erste Ausgestaltung einer Anhängerkupplung, die aus den Kernkomponenten Kupplungsarm 1, Kopfstück 21, Achskörper 2 und Halteplatte 7 besteht.

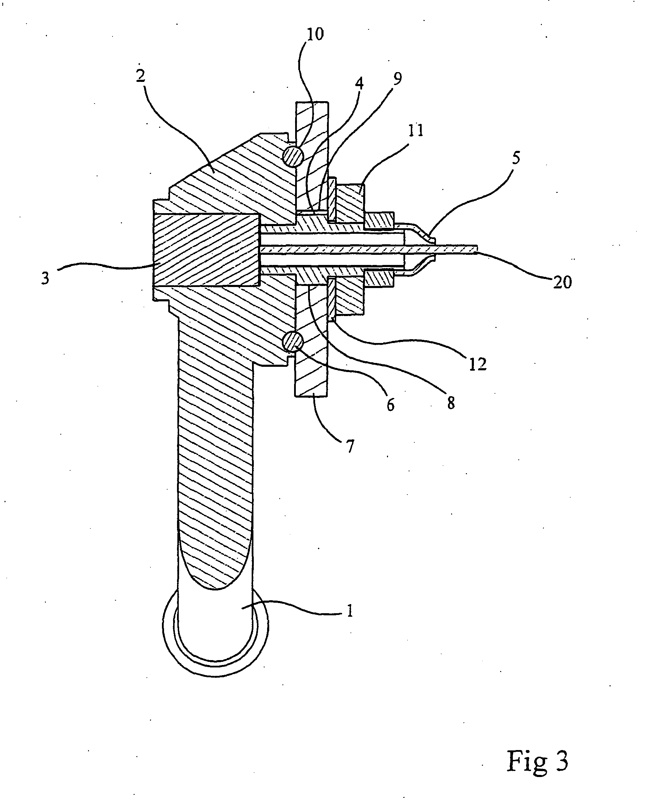

In Fig. 1 ist der Kupplungsarm 1 mit Achskörper 2 und Zahnrad 4 auf der Hohlwelle 5 dargestellt. Am Rand des Achskörpers 2 sind Verriegelungskugeln 6 eingepresst. Durch die Hohlwelle 5 hindurch wird z.B. über einen Bowdenzug 20 (Fig. 3) die im Achskörper 2 integrierte Verriegelungsmechanik 3 nach dem Stande der Technik (DE 103 20 302 A1) betätigt.

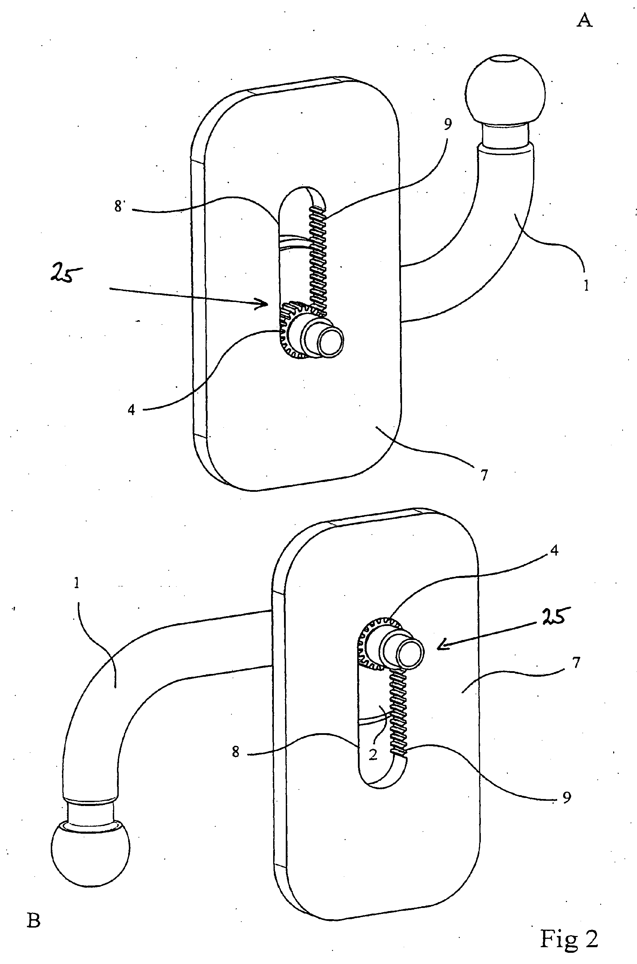

In Fig. 2 ist die in Fig. 1 dargestellte Vorrichtung in eine Halteplatte 7 eingesetzt. Die Halteplatte 7 ist mit einem nicht dargestellten Fahrzeug fest verbunden. Sei weist eine Führungskulisse 8 auf, wobei eine Seite der Führungskulisse 8 eine mit dem Zahnrad 4 kämmende Verzahnung 9 hat, so dass die Führungskulisse 8 mit dem Achskörper 2 eine Zahnstangenwinde 25 bildet. Durch Drehen des Kupplungsarmes 1 beispielsweise mittels eines nicht dargestellten Antriebsmotors kann sich der Achskörper 2 mit dem Zahnrad 4 in der Führungskulisse 8 nach oben oder unten bewegen, weil das Zahnrad 4 auf der Zahnung 9 abrollt, wodurch eine translatorische Bewegung des Achskörpers 2 mit dem verbundenen Kupplungsarm 1 entsteht. Somit wird die Rotationsbewegung des Achskörpers 2 zeitgleich in eine Translationsbewegung umgewandelt, wobei sich die beiden Bewegungen überlagern. Die translatorische Bewegung verläuft ausschließlich in einer vertikalen Ebene, die parallel zur Halteplatte 7 liegt.

Vorteilhaft ist, dass die beiden Bewegungen nur mit einem Antriebsmotor bewirkt werden, da der für die Schwenkbewegung vorgesehene Antriebsmotor zugleich den Antrieb für die translatorische Hubbwegung des Achsglieds 2 leistet, so dass für die gesamte Verstellbewegung nur ein Antriebsmotor benötigt wird.

In der Gebrauchsstellung A zeigt der Kupplungsarm 1 mit dem Kopfstück 21 nach oben. Durch die Rotationsbewegung wird der Kupplungsarm 1 zusammen mit dem Kopfstück 21 nach unten geschwenkt, so dass der Kupplungsarm 1 unter dem nicht dargestellten Stoßfänger wegschwenken kann. Die Rotationsbewegung wird ausgeführt, bis der Kupplungsarm 1 mit dem Kopfstück 21 nach unten zeigt. Durch die zeitgleiche translatorische Bewegung in einer vertikalen Ebene nach oben befindet sich das Achsglied 2 in einer erhöhten Position, so dass der Kupplungsarm 1 hinter dem Stoßfänger steht und nicht mehr sichtbar ist.

In Fig. 3 ist dargestellt, dass die Verriegelungsmechanik 3 im Normalfall den Achskörper 2 gegen die Halteplatte 7 presst, so dass die Verriegelungskugeln 6 in den Verriegelungsbohrungen 10 sitzen, wodurch ein Drehen des Achskörpers 2 gegenüber der Halteplatte 7 nicht möglich ist und der Kupplungsarm 1 entweder in der Gebrauchsstellung A oder Nichtgebrauchsstellung B in den jeweiligen Verriegelungsbohrungen 10 fixiert ist. Soll der Kupplungsarm 1 gedreht werden, ist ein manuell oder motorisch bewirktes Lösen der Verriegelungsmechanik 3 über den in der Hohlwelle 5 befindlichen Bowdenzug 20 möglich, wodurch der Achskörper 2 gegenüber der Halteplatte 7 durch eine in der Verriegelungsmechanik 3 befindliche starke Feder ausgerückt wird, so das sich die Verriegelungskugeln 6 aus den Verriegelungsbohrungen 10 lösen können und eine Drehung des Achskörpers 2 möglich wird.

Durch diese Drehung des Achskörpers 2 rollt das Zahnrad 4 in der Zahnung 9 ab und bewirkt eine lineare Verschiebung des Achskörpers 2 mit verbundenem Kupplungskörper 1. Zur Unterstützung dieser Bewegung ist zwischen der Halteplatte 7 und dem Widerlager 11 eine Gleitplatte 12 angeordnet um die Reibung zu verringern.

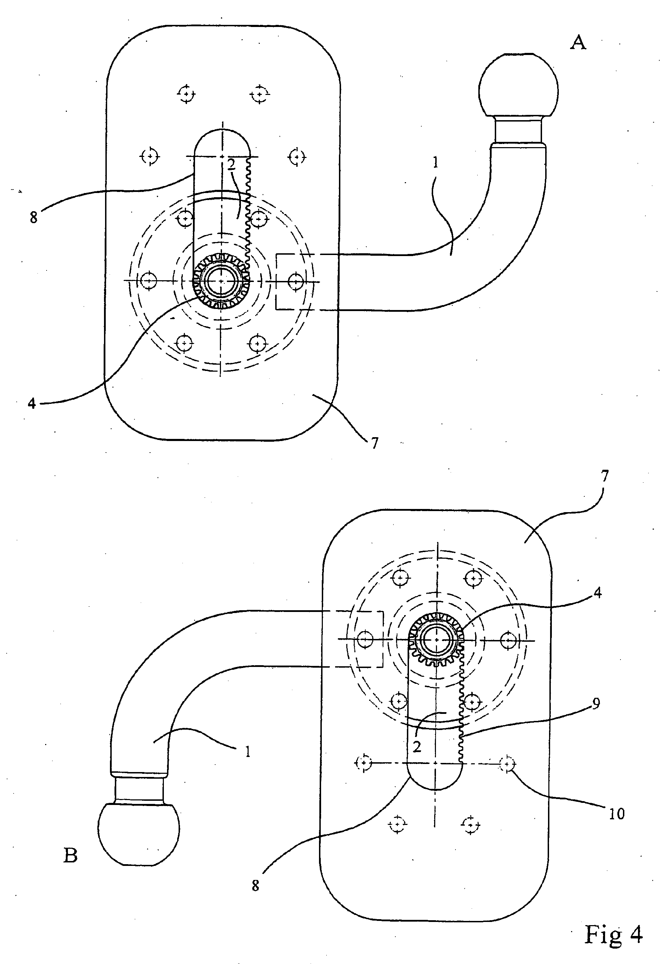

In Fig. 4 ist der in Fig. 3 beschriebene Vorgang noch einmal in der Längsansicht dargestellt. Es ist erkennbar, wie der Kupplungsträger 1 durch Drehung aus der Gebrauchsstellung A in die Nichtgebrauchstellung B sich durch Abrollen auf der Zahnung 9 mit dem Zahnrad 4 nach oben bewegen kann.

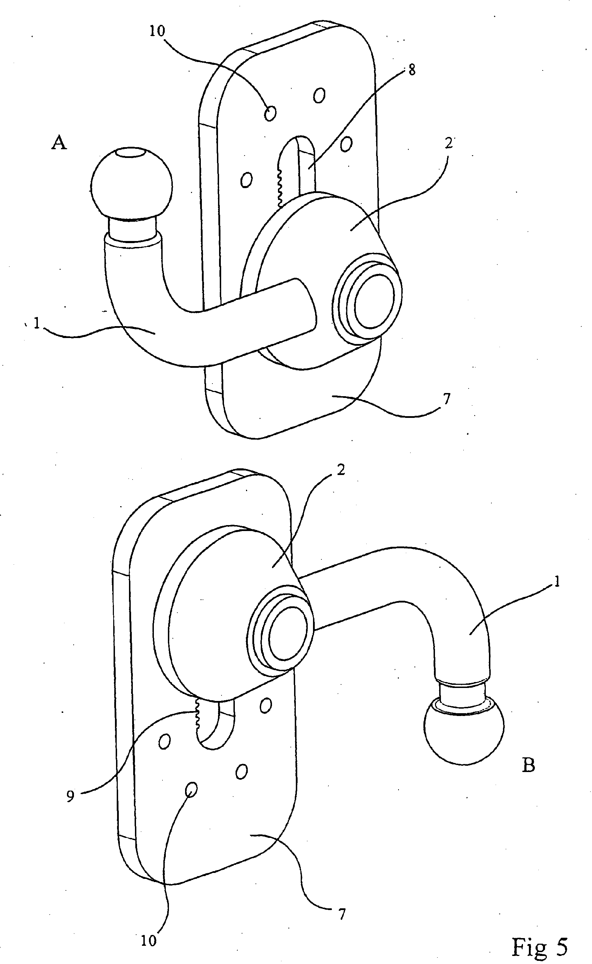

In Fig. 5 ist der Vorgang der nach Fig. 4 räumlich dargestellt. Wiederum ist erkennbar, wie sich der Kupplungsträger 1 durch Drehen und Abrollen in der Führungskulisse 8 auf der Zahnung 9 in die Nichtgebrauchstellung B anhebt und damit den Zweck der Erfindung erfüllt.

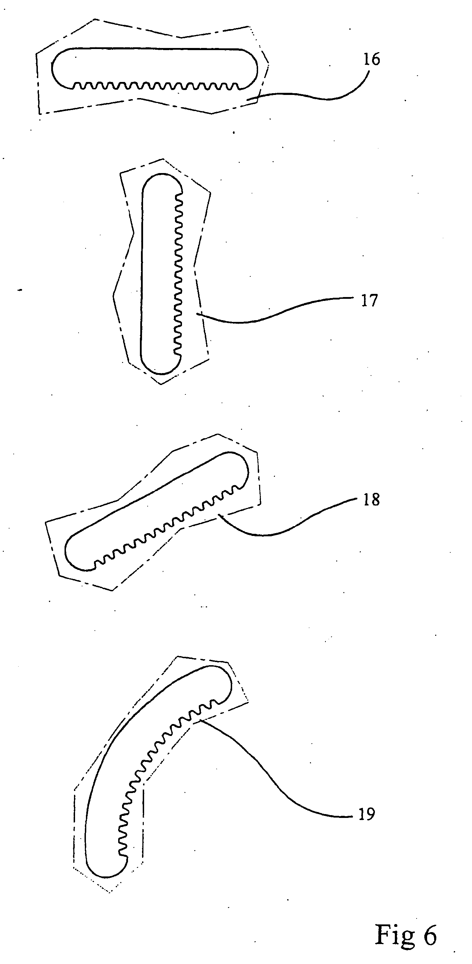

In Fig. 6 sind verschiedene Formen von Führungskulissen 8 abgebildet, nämlich "linear horizontal" 16, "linear vertikal" 17, "linear schräg" in jedem beliebigen Winkel 18 und "bogenförmig" in jedem beliebigen Radius. Es sind ferner auch beliebig ausgestaltete Kurvenformen möglich.

Durch die freie Wahl der Form der Führungskulisse 8 wird erfindungsgemäß eine große Flexibilität für die Integration der Anhängerkupplung in unterschiedliche Fahrzeugräume erzielt.

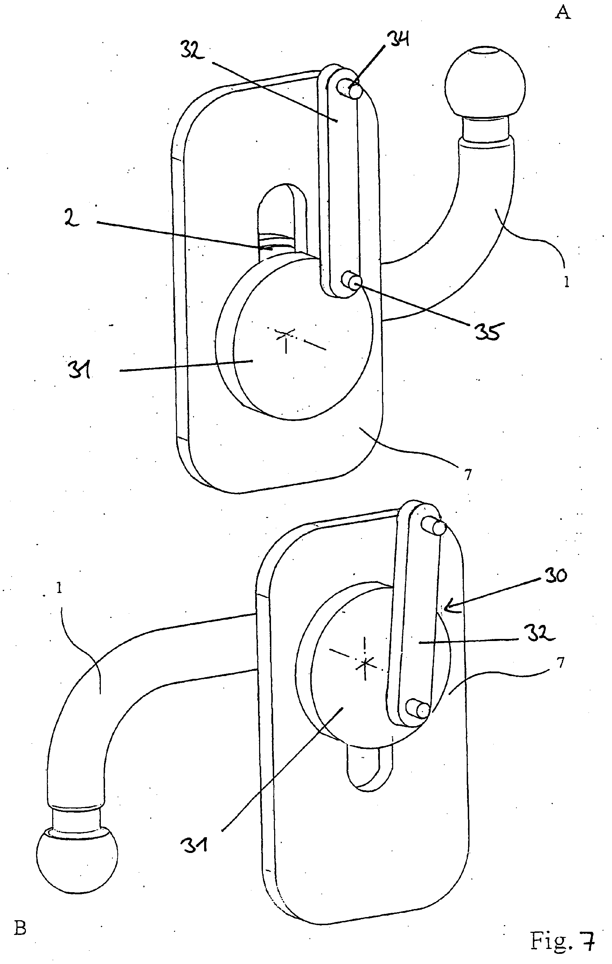

Die Fig. 7 zeigt eine zweite Ausgestaltung einer erfindungsgemäßen Anhängerkupplung in einer schematischen Darstellung. Im Unterschied zur ersten, in den Fig. 1 bis 6 gezeigten Ausgestaltung wird die Umwandlung der Rotationsbewegung in die Translationsbewegung nicht durch eine Zahnstangenwinde 25 sondern durch eine Exzentervorrichtung 30 bewirkt. Aus diesem Grund ist an dem Achskörper 2 eine Exzenterscheibe 31 mit einem Zapfen 35, der außerhalb des Mittelpunkts der Exzenterscheibe 31 liegt, angeordnet. An diesem Zapfen 35 ist ein Exzenterarm 32 drehbar angelenkt. Das andere Ende des Exzenterarms 32 ist drehbar an einem fest an der fahrzeugfesten Halteplatte 7 angeordneten Zapfen 34 angelenkt.

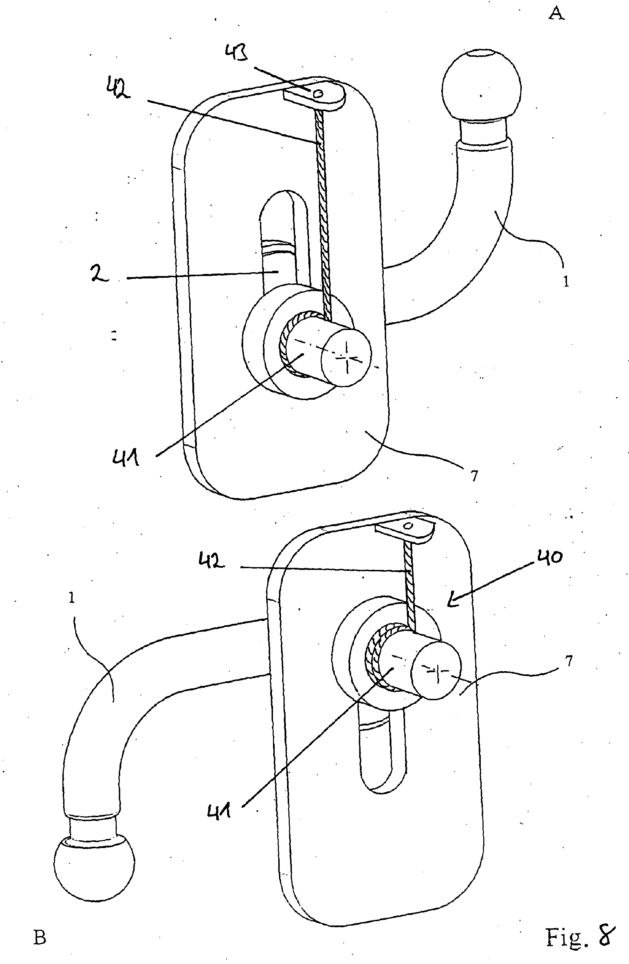

Die Fig. 8 zeigt eine dritte Ausführungsform einer erfindungsgemäßen Ausgestaltung in einer schematischen Darstellung. Im Unterschied zur ersten und zweiten Ausgestaltung wird die Umwandlung der Rotationsbewegung in die Translationsbewegung durch eine Seilwinde 40 nach Art einer Trommelwinde bewirkt. Hierzu ist an dem Achskörper 2 eine zylindrische Trommel 41 angeordnet, auf der ein Seil 42 aufgewickelt wird, wobei auch ein Band oder eine Kette möglich wäre. Das andere Ende des Seils 42 ist über ein Befestigungselement 43 fest mit der Halteplatte 7 verbunden.

## Patentansprüche

1. Anhängerkupplung für Kraftfahrzeuge, insbesondere Personenkraftwagen, mit einem Kupptungsarm (1), der an einem Ende ein Kopfstück (21) zum lösbaren Befestigen eines Anhängers trägt, und am anderen Ende mit einem Achskörper (2) fest verbunden ist und der zwischen einer Gebrauchssteltung A und einer Nichtgebrauchsstellung B hin und her verstellbar ist, **dadurch gekennzeichnet, dass** die Anhängerkupplung Umwandlungsmittel (25, 30, 40) aufweist, durch welche während der Verstellung eine Rotationsbewegung des Achskörpers (2) in eine sich der Rotationsbewegung überlagernde Translationsbewegung des Achskörpers (2) umgewandelt wird.

2. Anhängerkupplung nach Anspruch 1, **dadurch gekennzeichnet, dass** die Translationsbewegung in einer vertikalen Ebene verläuft.

3. Anhängerkupplung nach Anspruch 1 oder 2, **dadurch gekennzeichnet, dass** die Umwandtungsmittel eine Zahnstangenwinde (25) umfassen.

4. Anhängerkupplung nach Anspruch 3, **dadurch gekennzeichnet, dass** ein am Achskörper (2) angeordnetes Zahnrad (4) innerhalb einer verzahnten, insbesondere fahrzeugfesten, Führungskulisse (8) abrollt.

5. Anhängerkupplung nach Anspruch 4, **dadurch gekennzeichnet, dass** die Führungskulisse (8) horizontal linear (16), vertikal linear (17), in einen vorgegebenen Winkel schräg linear (18), in Bögen (19) oder in einer freien Kurvenform ausgestaltet ist.

6. Anhängerkupplung nach Anspruch 1 oder 2, **dadurch gekennzeichnet, dass** die Umwandlungsmittel eine Exzentervorrichtung (30) umfassen.

7. Anhängerkupplung nach Anspruch 6, **dadurch gekennzeichnet, dass** am Achskörper (2) eine Exzenterscheibe (31) angeordnet ist, an der ein Exzenterarm (32) angelenkt ist.

8. Anhängerkupplung nach Anspruch 1 oder 2, **dadurch gekennzeichnet, dass** die Umwandlungsmittel eine Seilwinde (40) umfassen, wobei als Zugmittel insbesondere ein Seil (42), ein Band oder eine Gliederkette vorgesehen ist

9. Anhängerkupplung nach einem der vorhergehenden Ansprüche, **dadurch gekennzeichnet, dass** sie in der Nichtgebrauchsstellung und/oder in der Gebrauchsstellung durch eine Verriegelungsmechanik (3) verriegelbar ist.

10. Anhängerkupplung nach einem der vorhergehenden Ansprüche, **dadurch gekennzeichnet, dass** sich der Kupplungsarm (1) mit dem Achskörper (2) nach der Entriegelung ausgehend von der Nichtgebrauchsstellung durch die Schwerkraft nach unten bewegt.

11. Anhängerkupplung nach einem der vorhergehenden Ansprüche, **dadurch gekennzeichnet, dass** die Anhängekupplung derart ausgestaltet ist, dass bei Antrieb der Rotationsachse des Achskörpers (2) die sich überlagernde translatorische Bewegung des Achskörpers (2), insbesondere zeitgleich, eingeleitet wird.

12. Anhängerkupplung nach einem der vorhergehenden Ansprüche, **dadurch gekennzeichnet, dass** ein Antriebsmotor die Rotationsbewegung des Achskörpers (2) bewirkt.

## Claims

1. Trailer coupling for motor vehicles, in particular cars, with a coupling arm (1) supporting at one end a head section (21) for the releasable mounting of a trailer and being at the other end permanently joined to an axle body (2) and movable between a position of use A and an inoperative position B, **characterised in that** the trailer coupling is provided with conversion means (25, 30, 40) for converting a rotary motion of the axle body (2) into a translatory motion of the axle body (2) which is superimposed on the rotary motion while the coupling arm is being moved.

2. Trailer coupling according to claim 1, **characterised in that** the translatory motion runs in a vertical plane.

3. Trailer coupling according to claim 1 or 2, **characterised in that** the conversion means comprise a rack-and-lever jack (25).

4. Trailer coupling according to claim 3, **characterised in that** a gear (4) on the axle body (2) runs within a guide link (8) which is in particular fixed to the vehicle.

5. Trailer coupling according to claim 4, **characterised in that** the guide link (8) is designed horizontally linear (16), vertically linear (17), obliquely linear (18) at a preset angle, in bends (19) or in a free curve shape.

6. Trailer coupling according to claim 1 or 2, **characterised in that** the conversion means comprise an eccentric device (30).

7. Trailer coupling according to claim 6, **characterised in that** a cam disc (31) to which an eccentric arm (32) is hinged is provided on the axle body (2).

8. Trailer coupling according to claim 1 or 2, **characterised in that** the conversion means comprise a cable winch (40), a cable (42), a belt or a chain being in particular provided as traction means.

9. Trailer coupling according to any of the preceding claims, **characterised in that** it is lockable by a locking mechanism (3) in the inoperative position and/or in the position of use.

10. Trailer coupling according to any of the preceding claims, **characterised in that** the coupling arm (1), following the unlocking process, moves downwards together with the axle body (2) from the inoperative position under the influence of gravity.

11. Trailer coupling according to any of the preceding claims, **characterised in that** the trailer coupling is designed such that, if the axis of rotation of the axle body (2) is driven, the superimposed translatory motion of the axle body (2) is initiated, in particular simultaneously.

12. Trailer coupling according to any of the preceding claims, **characterised in that** a drive motor effects the rotary motion of the axle body (2).

## Revendications

1. Attelage pour véhicules automobiles, notamment voitures particulières, avec un bras d'attelage (1), qui porte à une extrémité une tête (21) pour la fixation amovible d'une remorque et est relié solidement à l'autre extrémité à un corps d'axe (2) et qui peut être déplacé dans un sens et dans l'autre entre une position d'utilisation A et une position de non-utilisation B, **caractérisé en ce que** l'attelage présente des moyens de conversion (25, 30, 40), par lesquels pendant le déplacement, un mouvement de rotation du corps d'axe (2) est converti en un mouvement de translation du corps d'axe (2) se superposant au mouvement de rotation.

2. Attelage selon la revendication 1, **caractérisé en ce que** le mouvement de translation s'étend dans un plan vertical.

3. Attelage selon la revendication 1 ou 2, **caractérisé en ce que** les moyens de conversion comprennent un cric à crémaillère (25).

4. Attelage selon la revendication 3, **caractérisé en ce qu'**une roue dentée (4) agencée sur le corps d'axe (2) roule à l'intérieur d'une coulisse de guidage (8) dentée, en particulier fixée au véhicule.

5. Attelage selon la revendication 4, **caractérisé en ce que** la coulisse de guidage (8) est réalisée de manière linéaire horizontale (16), linéaire verticale (17), linéaire oblique selon un angle prédéfini (18), en arcs (19) ou en une forme curviligne libre.

6. Attelage selon la revendication 1 ou 2, **caractérisé en ce que** les moyens de conversion comprennent un dispositif excentrique (30).

7. Attelage selon la revendication 6, **caractérisé en ce qu'**un disque excentrique (31) auquel est articulé un bras excentrique (32) est agencé sur le corps d'axe (2).

8. Attelage selon la revendication 1 ou 2, **caractérisé en ce que** les moyens de conversion comprennent un treuil à câble (40), en particulier un câble (42), une sangle ou une chaîne à maillons étant prévu comme moyen de traction.

9. Attelage selon l'une quelconque des revendications précédentes, **caractérisé en ce qu'**il peut être verrouillé dans la position de non-utilisation et/ou dans la position d'utilisation par un mécanisme de verrouillage (3).

10. Attelage selon l'une quelconque des revendications précédentes, **caractérisé en ce que** le bras d'attelage (1) se déplace avec le corps d'axe (2) vers le bas par gravité en partant de la position de non-utilisation après déverrouillage.

11. Attelage selon l'une quelconque des revendications précédentes, **caractérisé en ce que** l'attelage est réalisé de telle sorte que l'entraînement de l'axe de rotation du corps d'axe (2) déclenche, en particulier simultanément, le mouvement de translation se superposant du corps d'axe (2).

12. Attelage selon l'une quelconque des revendications précédentes, **caractérisé en ce qu'**un moteur d'entraînement induit le mouvement de rotation du corps d'axe (2).
